# FASCICULE DE BREVET EUROPEEN

(11) **EP 0 438 099 B1**
(45) Date de publication et mention de la délivrance du brevet: **16.08.1995**
(21) Numéro de dépôt: 91100371.3
(22) Date de dépôt: 14.01.1991
(51) Int. Cl.: H04Q 7/38, H04B 7/26

(54) **Procédé de transfert de communication dans un réseau de radiotéléphone**
Verfahren für das Umlegen einer Verbindung in einem Funktelefon-Netz
Method for communication transfer in a radiotelephone network

(30) Priorité: 18.01.1990 FR 9000563
(43) Date de publication de la demande: 24.07.1991
(73) Titulaire: ALCATEL CIT, 75008 Paris (FR)
(72) Inventeur: Issenmann, Edouard, F-78150 Le Chesnay (FR); Reysset, Jean, F-91210 Draveil (FR)
(74) Mandataire: Weinmiller, Jürgen

(56) Documents cités:
- EP-A- 0 174 419
- EP-A- 0 214 319
- EP-A- 0 281 111
- ELECTRICAL COMMUNICATION. vol. 63, no. 4, 1989, Brussels,BE;pages 389 - 399; M.BALLARD et al: "Cellular Mobile Radio as an Intelligent Network Application"

## Description

La présente invention concerne un procédé de transfert de communication dans un réseau de radiotéléphonie et, plus particulièrement dans un réseau de radiotéléphonie cellulaire.

Les réseaux de radiotéléphonie cellulaire sont bien connus et ont fait l'objet de nombreuses publications parmi lesquelles on mentionnera, concernant le futur système paneuropéen:
- l'article "Le système cellulaire numérique européen de communication avec les mobiles" de B. Ghillebaert et al, paru dans l'"Echo des Recherches" du 1^{er} trimestre 1988 et
- l'article "Le système radio-mobile ECR 900" de M. Ballard et al, paru dans la revue "Telecommutant", n°4 de Juin 1989.

En quelques mots, l'étendue géographique couverte par un tel réseau est divisée en cellules, chacune desservie par un émetteur-récepteur permettant des communications radiotéléphoniques avec des stations mobiles situées dans la cellule. Les émetteurs-récepteurs de plusieurs cellules font partie d'une même station de base. Des stations de base voisines sont connectées à un centre de commutation radio-mobile. Les différents centres de commutation radio-mobile sont interconnectés par le réseau de télécommunications général. Une communication radiotéléphonique est établie par le réseau de télécommunications, un centre de commutation radio-mobile, une station de base et un émetteur-récepteur qui communique avec la station mobile en cause.

Cette station mobile se déplace et peut quitter la cellule dans laquelle elle se trouve. La communication en cours, établie par un premier émetteur-récepteur appartenant à une première station de base, doit se poursuivre par un deuxième émetteur-récepteur, éventuellement appartenant à une deuxième station de base, laquelle, éventuellement, est connectée à un deuxième centre de commutation radio-mobile.

En supposant que cet émetteur-récepteur appartienne à la même station de base que le premier, un transfert de la communication, par aiguillage du premier émetteur-récepteur sur le deuxième, doit alors être effectué dans la station de base, tandis qu'un basculement radioélectrique similaire doit être effectué dans la station mobile.

Dans un réseau de radiotéléphonie disposant d'une horloge synchrone pour le réseau entier, tel que celui du document EP-A3-0174419, ledit aiguillage et ledit basculement sont effectués en même temps, afin de limiter la durée de la coupure de communication ressentie par les usagers. Le moyen employé est le déclenchement synchrone de ces deux opérations en ayant recours à l'horloge synchrone. Ce moyen est coûteux et difficile à mettre en oeuvre.

Un procédé connu évitant le recours à des opérations de commande se référant à une horloge synchrone dans la réalisation d'un tel transfert de communication consiste à insérer, dans la station de base, un circuit de conférence à trois accès, dont deux accès sont utilisés par la communication radiotéléphonique, l'un d'eux conduisant, par une première branche, vers le réseau de télécommunications, tandis qu'un second accès conduit, par une deuxième branche, vers le premier émetteur-récepteur. Au moment où le transfert devient nécessaire, pour préparer l'aiguillage de la communication, une branche d'aiguillage est établie à partir du troisième accès du circuit de conférence, conduisant vers le deuxième émetteur-récepteur. La station mobile peut alors basculer la communication de la deuxième branche sur la branche d'aiguillage à n'importe quel moment, sans que la communication radiotéléphonique n'ait à souffrir d'autre coupure que celle qui est nécessaire pour procéder à ce basculement radioélectrique. Ensuite, quand la communication radiotéléphonique est établie par le deuxième émetteur-récepteur, le circuit de conférence utilisé est retiré de la communication.

Le transfert d'une communication vers une cellule d'une deuxième station de base s'effectue selon le même procédé, par aiguillage au niveau du centre de commutation radio-mobile, à l'aide d'un circuit de conférence, dans lequel ladite branche d'aiguillage s'étend alors vers la deuxième station de base et, dans celle-ci, vers le deuxième émetteur-récepteur.

Le transfert d'une communication vers une cellule d'une deuxième station de base elle-même connectée à un deuxième centre de commutation s'effectue encore selon le même procédé, par aiguillage au niveau du premier centre de commutation radio-mobile, à l'aide d'un circuit de conférence, ladite troisième branche s'étendant, dans ce cas, vers le deuxième centre de commutation radio-mobile et, à travers celui-ci, vers la deuxième station de base et le deuxième émetteur-récepteur.

Un tel système de transfert de communication radiotéléphonique est criticable même lorsque les communications radiotéléphoniques sont des communications vocales. L'insertion d'un circuit de conférence et son retrait causent deux coupures de communication qui, bien que courtes, sont audibles et s'ajoutent aux conséquences du basculement effectué dans la station mobile. Ce basculement, qui entraîne une coupure de la communication plus longue, est effectué dans des conditions déterminées par les procédures d'établissement de communications radio-mobile et possède de ce fait un caractère incompressible.

Toutefois, les communications radiotéléphoniques, tout comme les communications avec des postes fixes, doivent permettre la transmission de données. L'emploi de circuits de conférence devient alors inacceptable, au moins dans certains cas, car le circuit de conférence, en connectant deux voies d'entrée vers une même sortie, combine ces deux entrées d'une manière qui, du point de vue de la transmission de données, fournit des données de sortie inexploitables.

L'invention vise ainsi, sans avoir recours à des opérations se référant à une horloge synchrone, à supprimer les coupures de communication multiples à l'occasion d'un transfert de communication radiotéléphonique, afin de réduire les perturbations qu'elles apportent dans les communications vocales, et à réaliser le transfert de communication sans même avoir recours à des circuits de conférence, puisque ceux-ci sont nuisibles aux communications de données.

L'invention atteint cet objectif en prévoyant un procédé de transfert de communication radiotéléphonique dans lequel ledit aiguillage de la communication est préparé préalablement aux opérations d'aiguillage et de basculement par la réservation de ladite branche d'aiguillage, sans que celle-ci soit raccordée à la communication en cours. Ce procédé se caractérise en ce que un ordre de basculement déclenchant l'opération de basculement, transmis à la station mobile, et l'aiguillage de la communication sur la branche d'aiguillage, en réponse à un ordre d'aiguillage, sont respectivement agencés pour que la coupure de communication relativement courte qui pourrait résulter de l'opération d'aiguillage se produise durant ledit intervalle de temps de coupure défini.

Plus précisément, l'exécution de l'opération d'aiguillage est retardée par une temporisation dont la durée est conditionnée par la position dans le temps et la durée dudit intervalle de temps de coupure défini à la suite de l'ordre de basculement et par le délai qui s'écoule entre l'émission de l'ordre d'aiguillage et l'exécution de l'opération d'aiguillage.

De préférence la position dans le temps de la coupure causée par l'exécution de l'opération d'aiguillage est telle qu'elle se trouve au milieu dudit intervalle de temps de coupure défini.

Les différents objets et caractéristiques de l'invention seront maintenant exposés de façon plus détaillée dans la description qui va suivre d'un mode de mise en oeuvre de l'invention, qui sera faite en se référant aux figures annexées qui représentent :
- la figure 1, un réseau radiotéléphonique cellulaire illustrant les opérations de transfert de communication,
- la figure 2, l'échelonnement dans le temps des opérations d'aiguillage et de basculement, conformément à la présente invention.

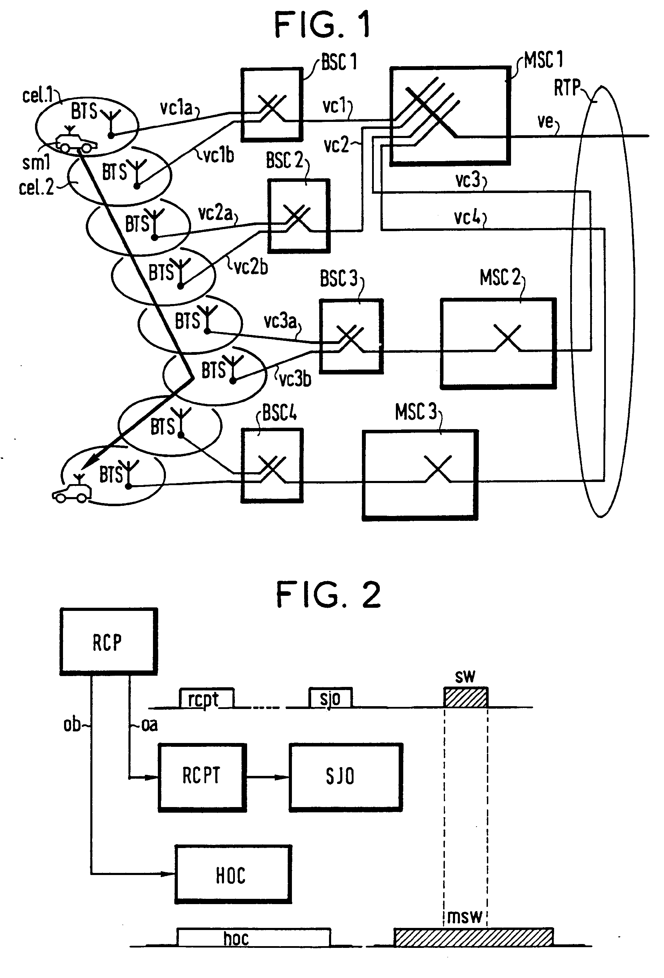

Le réseau radiotéléphonique représenté à la figure 1, décrit dans la deuxième publication mentionnée dans le préambule du présent texte, comprend des émetteurs-récepteurs de radiotéléphonie BTS, chacun couvrant une zone géographique appelée cellule, telle que la cellule cell. De telles cellules peuvent collectivement couvrir tout un pays. Elles se recouvrent partiellement.

Une station mobile, telle que sm1, présente dans une cellule, cell, peut bénéficier de communications radiotéléphoniques par l'intermédiaire de l'émetteur-récepteur BTS de la cellule.

Des émetteurs-récepteurs BTS de plusieurs cellules voisines appartiennent à une même station de base qui comporte un équipement de commande et de commutation, tel que BSC1, BSC2, etc.

Des stations de base voisines sont connectées à un même centre de commutation radio-mobile, MSC1, MSC2, etc. Et les centres de commutation radio-mobile sont connectés au réseau de télécommunications général RTP.

Une communication typique demandée par ou destinée à une station mobile sm1 est établie par une voie de communication ve connectant un correspondant atteint à travers le réseau de télécommunications général RTP à un centre de commutation radio-mobile, MSC1, un trajet de commutation dans ce centre MSC1, une voie de communication vc1 allant du centre MSC1 à l'équipement de commande et de commutation, BSC1, d'une station de base, un trajet de commutation dans l'équipement BSC1, une voie de communication vc1a allant de l'équipement BSC1 à l'émetteur-récepteur BTS d'une cellule, et une voie radioélectrique jusqu'à la station mobile sm1.

Cette station mobile, au cours de ses déplacements, viendra à quitter la cellule cell, pour entrer dans une cellule voisine, telle que la cellule cel2. La communication en cours à ce moment devra se poursuivre par l'intermédiaire de l'émetteur-récepteur BTS de la cellule cel2. Cela demandera un transfert de la communication radiotéléphonique d'une cellule à l'autre, c'est-à-dire d'un émetteur-récepteur à l'autre. Un tel transfert demandera l'établissement d'un autre trajet de commutation dans la station de base BSC1, allant, par une autre voie de communication, vc1b, jusqu'à l'émetteur-récepteur de l'autre cellule.

Dans le cas où la station mobile atteint une cellule faisant partie d'une autre station de base, la commutation à effectuer comprendra un trajet de commutation dans le centre de commutation MSC1, conduisant, par une voie de communication vc2, jusqu'à cette autre station de base, BSC2 par exemple, et, par un trajet de commutation dans la station de base BSC2, jusqu'à une voie de communication, vc2a par exemple, menant à l'émetteur-récepteur de la cellule.

Si cette autre station de base est connectée à un autre centre de commutation, le transfert demandera l'établissement d'un trajet de commutation, dans le centre de commutation MSC1, allant, par une voie de communication, vc3 par exemple, jusqu'à la station de base en cause, BSC3, dans laquelle un trajet de commutation conduira vers une voie de communication, telle que vc3a, jusqu'à l'émetteur-récepteur de la cellule visée.

Dans ce qui précède, on vient de décrire des opérations de commutation accomplies dans le réseau pour réaliser le transfert de la communication radiotéléphonique en suivant le déplacement de la station mobile sm1. Chacune de ces opérations de commutation comprend, selon une technique bien connue dans les installations de commutation, la préparation d'une branche d'aiguillage, par réservation des trajets de commutation et des voies de communication, à partir du miveau d'aiguillage, qui est figuré par le symbole d'une matrice de commutation, dans une station de base ou un centre de commutation. Ensuite, un ordre d'aiguillage est donné, qui libère la branche abandonnée et connecte la branche d'aiguillage. Entre la libération d'une branche, d'un côté, et la connexion de l'autre, d'un autre côté, il se produit une brève coupure de communication, que l'on peut chiffrer à quelque 30 ms.

Dans la station mobile sm1 elle-même, le passage d'une cellule à l'autre demande une opération de basculement. Cette opération est commandée par la station de base avec laquelle la station mobile est en relation avant le basculement. Elle est initialisée par la surveillance du niveau de réception dans la station mobile de signaux pilote, non seulement en provenance de l'émetteur-récepteur de la cellule dans laquelle se trouve la station mobile, mais aussi des émetteurs-récepteurs de cellules environnantes. La station de base est ainsi à même de déterminer qu'il est nécessaire de transférer la communication en cours pour cette station mobile de la cellule dans laquelle elle se trouve encore à une cellule voisine. Cela se traduit par l'envoi d'un ordre de basculement qui désigne à la station mobile le canal radioélectrique (appartenant à cette cellule voisine) auquel elle va devoir se coupler. La communication subit alors une coupure. La station mobile établit ensuite la relation avec la station de base (qui peut être la même ou une autre station de base) par ce dernier canal, puis la communication est rétablie. La durée de la coupure de communication causée par ce basculement, telle qu'elle est fixée par le Recommandation n°0208, "Qualité de service", chapitre A.1.9, points a) et b) du Groupe Spécial Mobile de la CEPT, est de 150 ms.

La présente invention, telle qu'elle est illustrée à la figure 2, prévoit que l'ordre de basculement est transmis à la station mobile, dans des conditions telles qu'il donne lieu à une coupure de la communication dans un intervalle de temps de coupure défini, et en ce que l'ordre d'exécution de l'opération d'aiguillage de la communication sur la branche d'aiguillage est donné, dans des conditions telles que la coupure de communication qui pourrait résulter de cette opération d'aiguillage se produise durant ledit intervalle de temps de coupure défini.

Plus précisément, la décision de transfert de la communication, prise en un niveau quelconque du réseau de la figure 1, est représenté en RCP. Cette décision donne lieu à un ordre d'aiguillage oa qui initialise une opération de temporisation RCPT, à l'issue de laquelle est déclenchée l'opération d'aiguillage proprement dite SJO. La figure 2 illustre le délai de temporisation rcpt, puis, après un intervalle figuré en pointillé, qui peut être comparativement très court, le délai sjo d'exécution de l'aiguillage. La coupure de communication correspondante est figurée en sw, sur la droite du délai sjo, pour des raison de clarté de la description, bien qu'elle soit sensiblement contemporaine.

La même décision RCP donne lieu à un ordre de basculement ob qui déclenche l'opération de basculement HOC. La durée de cette opération de basculement est représentée en hoc. La coupure de communication correspondante est figurée en msw, sur la droite du délai hoc, pour la localiser selon la même échelle de temps que la coupure sw.

Il est clair que, quel que soit le niveau où est prise la décision de transfert de la communication, il suffit de choisir la durée de la temporisation rcpt pour situer dans le temps l'exécution de l'opération d'aiguillage par rapport à l'opération de basculement, compte tenu de ce que l'opération d'aiguillage est considérablement plus courte que l'opération de basculement. Il est ainsi possible de situer dans le temps la coupure de communication sw qui serait due à l'opération de basculement, dans des conditions nominales de fonctionnement des équipements de commutation, au milieu de la coupure de communication qui est causée par l'opération de basculement, dans des conditions nominales de fonctionnement de la station mobile et des stations de base. De la sorte, la coupure sw, sur la figure 2, peut se décaler de 60 ms, soit dans un sens, soit dans l'autre, par rapport à la coupure mws, en raison de circonstances défavorables dans l'exécution des opérations d'aiguillage ou de basculement, sans cesser de coïncider avec cette dernière.

Des estimations permettent de penser qu'il en sera ainsi dans la très grande majorité des cas, de sorte que l'invention aboutira à ramener généralement la coupure de communication causée par un transfert de communication à la seule coupure nécessité par le basculement de la communication radioélectrique.

On remarquera que l'invention permet, outre l'économie de circuits de conférence, d'éliminer le coût, en temps de fonctionnement des organes de commande, de l'insertion et du retrait de ces circuits de conférence, d'éliminer le retard dans l'exécution du transfert nécessité par l'insertion d'un circuit de conférence, tandis que toutes les communications, qu'elles soient vocales ou de données, sont traitées de la même façon.

## Revendications

1. Procédé de transfert de communication dans un réseau de radiotéléphonie et, plus particulièrement dans un réseau de radiotéléphonie cellulaire, dans lequel, une communication radiotéléphonique étant établie avec une station mobile (sm1) par un premier émetteur-récepteur d'une première cellule (cel1), le transfert consiste en un aiguillage de la communication, à un niveau d'aiguillage, par une branche d'aiguillage, vers un deuxième émetteur-récepteur d'une deuxième cellule (cel2) accédant à la station mobile (sm1), en réponse à un ordre d'aiguillage (oa), et en un basculement opéré dans la station mobile (sm1) dudit premier émetteur-récepteur vers ledit deuxième émetteur-récepteur, en réponse à un ordre de basculement (ob) déclenchant l'opération de basculement, transmis à la station mobile, ce basculement donnant lieu à une coupure de la communication durant un intervalle de temps de coupure (msw) defini relativement long et ladite branche d'aiguillage (vc1b) étant préparée préalablement à l'exécution des opérations d'aiguillage et de basculement par la réservation de ladite branche d'aiguillage, sans que celle-ci soit raccordée à la communication en cours, **caractérisé en ce que** ledit ordre d'aiguillage (oa) est retardé par une temporisation (RCPT) dont la durée (rcpt) est conditionnée par la position dans le temps et la durée dudit intervalle de temps de coupure (msw) défini à la suite de l'ordre de basculement et par le délai qui s'écoule entre l'émission de l'ordre d'aiguillage et l'exécution de l'opération d'aiguillage, de sorte que la coupure de communication (sw) relativement courte qui pourrait résulter de l'opération d'aiguillage se produise durant ledit intervalle de temps de coupure (msw) défini.

2. Procédé de transfert de communication dans un réseau de radiotéléphonie conforme à la revendication 1, caractérisé en ce que la position dans le temps de la coupure (sw) causée par l'exécution de l'opération d'aiguillage est telle qu'elle se trouve nominalement au milieu dudit intervalle de temps de coupure défini (msw).

## Patentansprüche

1. Verfahren zur Weiterschaltung von Nachrichtenverbindungen in einem Funktelefonnetz und insbesondere in einem zellenförmigen Funktelefonnetz, in dem eine Funktelefonverbindung mit einer beweglichen Station (sm1) über einen ersten Sender-Empfänger einer ersten Zelle (cel1) aufgebaut wird, wobei die Weiterschaltung darin besteht, auf einer Vermittlungsebene die Nachrichtenverbindung aufgrund eines Leitbefehls (oa) über einen Leitweg auf einen zweiten Sender-Empfänger einer zweiten Zelle (cel2) zu lenken, der die bewegliche Station (sm1) erreicht, und in der beweglichen Station (sm1) vom ersten Sender-Empfänger eine Umlegung auf den zweiten Sender-Empfänger aufgrund eines an die bewegliche Station übertragenen Umschaltbefehls (ob) zu veranlassen, der die Umlegung auslöst, wobei diese Umlegung zu einer Unterbrechung der Nachrichtenverbindung während eines relativ langen definierten Unterbrechungszeitintervalls führt und der neue Leitweg (vc1b) vor der Ausführung der Vermittlungs- und Umschaltoperationen durch Reservierung des Leitwegs vorbereitet wird, ohne daß dieser an die aufgebaute Nachrichtenverbindung angeschlossen würde, dadurch gekennzeichnet, daß der Befehl zur Leitwegänderung (oa) durch eine Zeitverzögerung (RCPT) verzögert wird, deren Dauer (rcpt) von der zeitlichen Lage und der Dauer des definierten Trennzeitintervalls (msw) nach dem Umschaltbefehl und von der Zeit abhängt, die zwischen der Aussendung des Befehls zur Leitwegänderung und der Ausführung dieser Änderung verstreicht, so daß die relativ kurze Unterbrechung der Verbindung (sw), die aus der Leitwegänderung resultieren könnte, während des definierten Unterbrechungszeitintervalls abläuft.

2. Verfahren zur Weiterschaltung von Nachrichtenverbindungen in einem Funktelefonnetz nach Anspruch 1, dadurch gekennzeichnet, daß die zeitliche Lage der durch die Ausführung der Leitwegänderung hervorgerufenen Unterbrechung (sw) so liegt, daß sie nominal in der Mitte des definierten Unterbrechungszeitintervalls (msw) zu liegen kommt.

## Claims

1. Handover method for a radiotelephone network, more particularly a cellular radiotelephone network, in which method, a radiotelephone call having been established with a mobile (sm1) via a first transceiver of a first cell (cel.1), handover consists in handing over the call at a handover level via a handover branch to a second transceiver of a second cell (cel.2) accessing the mobile (sm1), in response to a handover instruction (oa), and in switching in the mobile (sm1) from said first transceiver to said second transceiver, in response to a switching instruction (ob) initiating the switching operation, sent to the mobile station, said switching interrupting the call during a relatively long predefined cutoff time interval (msw) and said handover branch (vc1b) being prepared before executing the handover and switching operations by reserving said handover branch, without the latter being connected to the call in progress, characterised in that said handover instruction (oa) is delayed by a time-delay (RCPT) whose duration (rcpt) is conditioned by the position in time and the duration of said defined cut-off time interval (msw) after the switching instruction and by the time-delay which elapses between the transmission of the handover instruction and the execution of the handover operation, so that the relatively short interruption (sw) of the call which may result from the handover operation occurs during said predefined cut-off time interval (msw).

2. Handover method for radiotelephone networks according to claim 1 characterised in that the position in time of the interruption (sw) caused by executing the handover operation is such that it is nominally in the middle of said defined cut-off time interval (msw).
